# FASCICULE DE BREVET EUROPEEN

(11) **EP 1 481 826 B1**
(45) Date de publication et mention de la délivrance du brevet: **02.04.2008**
(21) Numéro de dépôt: 04012015.6
(22) Date de dépôt: 21.05.2004
(51) Int. Cl.: B60H 1/00, F04D 29/66

(54) **Dispositif de ventilation d'habitacle, à atténuateur de bruit**
Belüftungsvorrichtung für einen Fahrzeuginnenraum mit Schalldämpfer
Ventilation device for a vehicle compartment with noise attenuator

(30) Priorité: 27.05.2003 FR 0306416
(43) Date de publication de la demande: 01.12.2004
(73) Titulaire: VALEO SYSTEMES THERMIQUES, 78321 Le Mesnil St Denis Cedex (FR)
(72) Inventeur: Bamdad Soufi, Djahanchach, 78120 Rambouillet (FR); Naji, Said, 78990 Elancourt (FR); Ailloud, Fabrice, 78280 Guyancourt (FR)

(56) Documents cités:
- DE-A- 19 957 618
- DE-U- 20 109 420
- US-A- 3 312 389
- US-A- 5 199 846

## Description

L'invention concerne les dispositifs de ventilation d'habitacle, notamment de véhicule automobile.

Elle concerne plus particulièrement les dispositifs de ventilation d'habitacle comprenant un boîtier muni, d'une part, d'une entrée d'air extérieur et d'une entrée d'air recirculé alimentant un ventilateur logé dans le boîtier sous le contrôle d'au moins un volet d'entrée d'air, et d'autre part, d'un module de commande chargé de gérer la position du volet d'entrée d'air et le débit d'air aspiré par le ventilateur.

Comme le sait l'homme de l'art, le comportement acoustique de ces dispositifs de ventilation dépend en partie de leurs entrées d'air. Celles-ci sont en effet à l'origine de perturbations subies par les flux d'air, notamment lorsque leur vitesse est supérieure à 10 m/s.

Plus précisément, les variations de vitesse dont sont l'objet les flux d'air sont transformées en pulsations de pression qui génèrent des bruits dont les fréquences sont au moins en partie situées dans la bande de fréquences audibles. Ces bruits, dont l'intensité dépend en outre du mode de fonctionnement du dispositif de ventilation (air recirculé ou air frais), se propagent jusque dans l'habitacle, via les conduits, les zones de transparence acoustique et les éléments structurels du véhicule, induisant une gène auditive pour ses occupants.

DE 199 57618 divulgue un dispositif selon le préambule de la revendication 1.

L'invention a donc pour but d'améliorer la situation.

Elle propose à cet effet un dispositif de ventilation d'habitacle, notamment de véhicule automobile, du type de celui présenté dans l'introduction, et dont l'une au moins des entrée d'air extérieur et entrée d'air recirculé est équipée de moyens d'atténuation chargés de limiter la propagation vers l'extérieur du boîtier, au moins côté habitacle, des ondes sonores qui sont produites par les flux d'air circulant dans ces entrées d'air.

Les moyens d'atténuation comprennent un écran acoustique.

Cet écran acoustique est agencé de manière à réfléchir (ou renvoyer) les ondes sonores vers une paroi du véhicule, placée à l'interface entre l'habitacle et le compartiment moteur, comme par exemple la cloison anti-feu.

En variante ou en complément, les moyens d'atténuation peuvent comprendre un revêtement, installé sur la paroi interne de l'écran acoustique (qui est exposée au flux d'air), et destiné à absorber au moins partiellement les ondes sonores.

Par ailleurs, au moins une partie des parois internes du boîtier (qui sont exposées au flux d'air) peut comporter des moyens d'atténuation auxiliaires, comme par exemple un revêtement destiné à absorber au moins partiellement les ondes sonores. Celui-ci est alors préférentiellement installé sur la partie concernée des parois internes du boîtier.

Le revêtement est préférentiellement réalisé dans un matériau de type poreux. Il s'agit par exemple d'une mousse à cellules ouvertes ou encore d'un matériau de type feutre.

Préférentiellement, l'écran acoustique délimite au moins une partie desdites entrée d'air recirculé et entrée d'air extérieur. Cet écran acoustique peut alors comporter une paroi munie d'une partie terminale faisant saillie, sur une première longueur choisie, à l'extérieur du boîtier, en amont d'au moins une desdites entrée d'air recirculé et entrée d'air extérieur. Cette première longueur est préférentiellement choisie en fonction d'une seconde longueur, perpendiculaire au plan défini sensiblement par la partie terminale de la cloison, et suivant laquelle s'étend une ouverture d'accès à au moins une desdites entrée d'air recirculé et entrée d'air extérieur.

En outre, l'écran acoustique peut être implanté au moins en partie à l'extérieur ou à l'intérieur du boîtier.

Enfin, l'ouverture d'accès à l'entrée d'air recirculé et l'ouverture d'accès à l'entrée d'air extérieur peuvent présenter des diamètres hydrauliques choisis.

D'autres caractéristiques et avantages de l'invention apparaîtront à l'examen de la description détaillée ci-après, et des dessins annexés, sur lesquels :
- la figure 1 illustre de façon schématique, dans une vue en coupe transversale médiane, une partie d'un premier mode de réalisation de dispositif de ventilation de véhicule automobile, selon l'invention,
- la figure 2 illustre de façon schématique, dans une vue en coupe longitudinale médiane, le premier mode de réalisation de la figure 1,
- la figure 3 illustre de façon schématique un mécanisme d'atténuation de bruit dans un dispositif de ventilation de véhicule automobile, selon l'invention,
- la figure 4 illustre, dans une vue en coupe transversale médiane, un deuxième mode de réalisation de dispositif de ventilation de véhicule automobile, selon l'invention, et
- la figure 5 illustre, dans une vue en coupe transversale médiane, un troisième mode de réalisation de dispositif de ventilation de véhicule automobile, selon l'invention.

Les dessins annexés pourront non seulement servir à compléter l'invention, mais aussi contribuer à sa définition, le cas échéant.

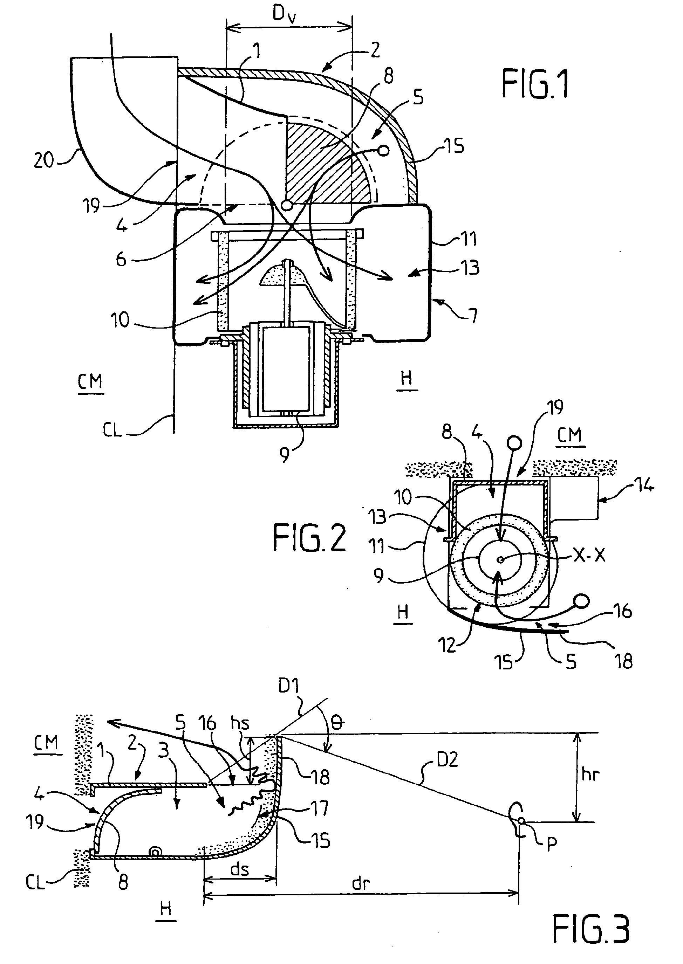

On se réfère tout d'abord aux figures 1 à 3 pour décrire un premier mode de réalisation de dispositif de ventilation selon l'invention.

Dans ce qui suit on considère, à titre d'exemple, que le dispositif de ventilation fait partie d'une installation de chauffage comprenant un boîtier d'alimentation en air 1, alimentant un boîtier de distribution et de traitement d'air (non représenté sur les figures) destiné à distribuer de l'air traité dans l'habitacle H d'un véhicule automobile, au niveau de bouches de distribution. Le boîtier 1 est par exemple solidarisé à la cloison anti-feu CL placée à l'interface entre le compartiment moteur CM et l'habitacle H.

Le dispositif de ventilation illustré (ou boîtier d'alimentation en air) 1 comprend des parois qui délimitent dans une première partie (supérieure) 2 une chambre d'alimentation en air 3. Les parois qui délimitent la chambre 3 comportent deux ouvertures 4 et 5 et une sortie 6 qui communique avec une seconde partie (inférieure) 7 du boîtier 1.

La première ouverture 4 est reliée à un conduit d'alimentation en air extérieur 20 implanté, dans l'exemple de réalisation, dans le compartiment moteur CM. Elle est donc appelée "entrée d'air extérieur" (ou entrée d'air frais). La seconde ouverture 5 communique avec l'habitacle H, éventuellement par l'intermédiaire d'un conduit. Elle est donc appelée "entrée d'air recirculé".

Par ailleurs, la chambre 3 loge un dispositif de sélection d'air 8, ici réalisé sous la forme d'un volet tambour, permettant à un module de commande (non représenté) de sélectionner le type du flux d'air d'alimentation (extérieur (ou frais) ou recirculé). Mais, comme on le verra plus loin, il pourrait s'agir d'un volet papillon ou d'un volet drapeau.

Les parois qui délimitent la partie inférieure 7 du boîtier 1 logent, dans une partie centrale, un groupe moto-ventilateur. Ce groupe moto-ventilateur comporte un moteur électrique 9 destiné à entraîner en rotation autour d'un axe XX, selon des régimes variables, une turbine 10 (ou roue). Les parois externes 11 de cette partie inférieure 7 du boîtier 1 délimitent avec la partie périphérique 12 de la turbine 10 une volute 13 qui s'enroule en spirale autour de la turbine 10 et dont la sortie 14 communique avec le boîtier de distribution et de traitement de l'installation de chauffage.

Lorsque la turbine 10 est mise en rotation par le moteur électrique 9, elle aspire axialement de l'air qui se trouve dans la chambre d'alimentation 3, et qui provient soit de l'entrée d'air extérieur 4, soit de l'entrée d'air recirculé 5, soit des deux entrées à la fois. La turbine éjecte, sensiblement tangentiellement à sa partie périphérique 12, l'air ainsi aspiré dans la volute 13, de façon à fournir au boîtier de distribution et de traitement de l'air pulsé, frais, recirculé ou mélangé. Le débit d'air aspiré par le ventilateur est géré par le module de commande.

Selon l'invention, le dispositif de ventilation comporte des moyens d'atténuation de bruit, préférentiellement réalisés sous la forme d'un écran acoustique 15 agencé sous la forme d'une paroi solidarisée au boîtier 1. Cet écran 15 délimite avec l'une des parois de la partie supérieure 2 du boîtier 1 l'entrée d'air recirculé 5, et notamment son ouverture d'admission 16 par laquelle pénètre l'air recirculé.

Comme cela est mieux illustré sur la figure 3, l'écran acoustique 15 peut présenter une forme choisie de manière à réfléchir (ou renvoyer) les ondes sonores, qui sont générées par les perturbations du flux d'air dans la chambre 3, vers le compartiment moteur CM (et plus précisément vers la cloison anti-feu CL), et donc à l'opposé de l'habitacle H. Préférentiellement, l'écran acoustique 15 présente une forme incurvée, orientée vers la cloison anti-feu CL. En d'autres termes, la cloison acoustique crée, entre la partie du dispositif de ventilation génératrice de bruit et l'habitacle H, une zone opaque acoustiquement, permettant ainsi de réduire notablement les bruits.

En variante ou en complément de cette configuration de réflexion de l'écran 15, les moyens d'atténuation peuvent comprendre un revêtement 17 chargé d'absorber au moins partiellement les ondes sonores générées dans la chambre 3. Préférentiellement, comme illustré sur la figure 3, le revêtement est réalisé dans un matériau absorbant 17, fixé sur la face interne de l'écran acoustique 15, qui est exposée au flux d'air dans l'entrée d'air recirculé 5. Dans un autre mode de réalisation, l'écran pourrait être constitué par le matériau absorbant acoustique.

Ce matériau de revêtement 17 est préférentiellement de type poreux. Il s'agit par exemple d'une mousse à cellules ouvertes ou d'un matériau de type feutre.

Un tel matériau absorbant peut être également installé sur la face interne (exposée aux flux) d'une ou plusieurs autres parois du boîtier 1, comme par exemple sur les parois qui délimitent la chambre 3, notamment au voisinage de l'entrée d'air extérieur, et/ou les parois externes 11 qui délimitent la volute 13. Lorsqu'il est placé ailleurs que sur la cloison acoustique 15, le matériau absorbant constitue des moyens d'atténuation auxiliaires.

Par ailleurs, comme cela est illustré sur les figures 2 et 3, l'écran acoustique 15 peut comporter une partie terminale 18 qui se prolonge au-delà de l'entrée d'air recirculé 5, et plus précisément au-delà (en amont) de l'ouverture d'admission 16, sur une première longueur choisie hs. Préférentiellement, cette partie terminale 18 s'étend dans un plan sensiblement perpendiculaire au plan contenant sensiblement l'ouverture d'admission 16.

Cette extension 18 de la cloison acoustique 15 permet de fixer le niveau d'atténuation des bruits (en dehors de l'action d'un éventuel matériau absorbant 17).

En fait, comme illustré sur la figure 3, on peut définir un angle θ entre une droite D1, passant par l'extrémité de la partie terminale 18 de la cloison acoustique 15 et l'extrémité de l'ouverture d'admission 16, opposée à la cloison acoustique 15, et une droite D2, passant par l'extrémité de la partie terminale 18 de la cloison acoustique 15 et un point P correspondant, par exemple, à l'emplacement d'une oreille d'un occupant installé dans l'habitacle H.

Si l'on suppose que le point P est fixe, on voit que l'on peut faire varier l'angle θ en faisant varier la première longueur hs et/ou la largeur (ou seconde longueur) ds de l'ouverture d'admission 16. hs est par exemple égal à environ 10 millimètres.

En définissant :
- un paramètre dr comme étant la distance séparant horizontalement le point P de l'extrémité de l'ouverture d'admission 16 par laquelle passe la droite D1 (dr est par exemple égal à environ 1 mètre), et
- un paramètre hr comme étant la distance séparant verticalement le point P de l'extrémité de la partie terminale 18 de la cloison acoustique 15, par laquelle passent les droites D1 et D2, (hr est par exemple égal à environ 110 millimètres),
on peut alors obtenir la relation suivante: θ = arctan[hr/(dr-ds)] + arctan[hs/ds].

Et, en définissant :
- un paramètre m comme étant la masse de la cloison acoustique 15,
- un paramètre ω comme étant la fréquence des ondes acoustiques (bruits),
- un paramètre ρ comme étant la densité de la cloison acoustique 15, et
- un paramètre c comme étant la célérité du son dans l'air,
on peut alors définir approximativement le coefficient d'absorption R de la cloison acoustique 15 (en décibels (ou db)) par la relation de Rayleigh : R = 20.log[(m.ω.cos θ)/(2.ρ.c)].

On voit alors que l'atténuation des bruits croit avec la fréquence sonore ω et/ou avec l'angle θ.

Afin d'atténuer encore plus les bruits générés dans la chambre 3, on peut également choisir de façon appropriée les dimensions (notamment ds) de l'ouverture d'admission 16 de l'entrée d'air recirculé 5 et de l'ouverture d'admission 19 de l'entrée d'air extérieur 4.

En effet, les dimensions respectives des deux ouvertures d'admission 16 et 19 sont choisies en fonction des puissances de flux recherchées dans les modes de fonctionnement en air recirculé et en air frais. Or, les différences de puissance entre ces deux modes de fonctionnement génèrent une différence de bruit perceptible dans l'habitacle H.

Les dimensions appropriées d'une ouverture d'admission 16 ou 19 dépendent du diamètre hydraulique (Dhr ou Dhf) de la surface occupée par le flux d'air (recirculé ou extérieur) au travers de ladite ouverture d'admission. Par définition, ce diamètre hydraulique (Dhr ou Dhf) est égal à quatre fois la surface de l'ouverture divisé par le périmètre de cette surface. Par ailleurs, le diamètre hydraulique (Dhr ou Dhf) doit être le plus près possible de ce que l'homme de l'art appelle le diamètre interne de la virole (Dv) du ventilateur 9 (figure1).

On peut alors montrer, en définissant le paramètre a comme étant l'ouverture équivalente du matériau absorbant poreux en pourcentage de la surface totale, que des conditions optimales d'atténuation, en présence d'une cloison acoustique 15 munie d'une partie terminale 18, peuvent être obtenues en présence des inégalités suivantes:
0,02 ≤ ds/dr ≤ 0,2 ;
0 ≤ hs/hr ≤ 1 ;
0,02 ≤ (4.a)/(π.Dhr2) ≤ 0,5 ;
0,9 ≤ Dhr/Dv; et
0,6 ≤ Dhr/Dhf ≤ 1,2.

L'ouverture équivalente du matériau absorbant est définie par la somme des surfaces des ouvertures que divise la surface totale (surface totale de débit).

Il est important de noter que la cloison acoustique 15 peut soit faire partie intégrante du boîtier 1, par exemple lorsque ce dernier est réalisé par moulage dans un matériau tel qu'un polymère, soit être un élément rapporté.

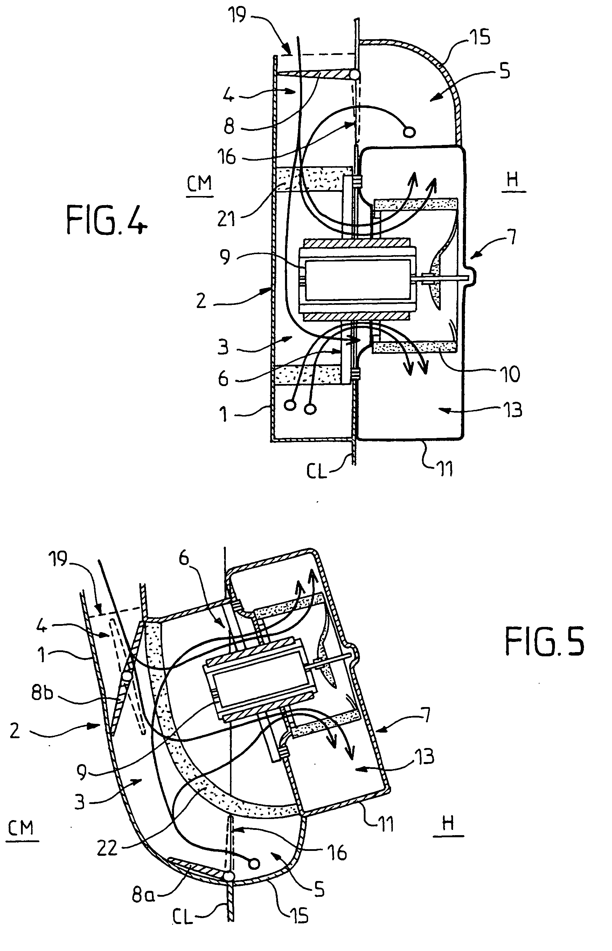

On se réfère maintenant à la figure 4 pour décrire un deuxième mode de réalisation d'un dispositif de ventilation selon l'invention.

Dans ce deuxième mode de réalisation, les deux parties 2 et 7 du boîtier 1 ne sont plus placées dans des positions sensiblement horizontales, mais sensiblement verticales. La première partie 2 du boîtier 1, qui délimite la chambre 3, est désormais située dans le compartiment moteur CM et loge, dans une partie centrale, une partie du moteur électrique 9, tandis que la seconde partie 7 du boîtier 1 est désormais située dans l'habitacle H et loge le reste du groupe moto-ventilateur (turbine 10, volute 13 et reste du moteur électrique 9).

Par ailleurs, la chambre 3 loge ici un filtre à air 21, de type circulaire, dans lequel est ménagé une ouverture pour le passage du moteur électrique 9.

En outre, en raison de la proximité des entrée d'air recirculé 5 et entrée d'air extérieur 4, le dispositif de sélection de flux d'air 8 est un volet de type drapeau.

Les moyens d'atténuation sont toujours réalisés sous la forme d'un écran acoustique 15 placé au niveau de l'entrée d'air recirculé 5. L'écran acoustique 15 est solidarisé à la partie supérieure de la seconde partie 7 du boîtier 1 ainsi qu'à la cloison anti-feu CL ou à la première partie 2 du boîtier 1. Cet écran acoustique 15 sert de zone opaque acoustiquement pour les entrée d'air recirculé 5 et entrée d'air extérieur 4 du fait de leur proximité immédiate, permettant ainsi de réduire notablement les bruits générés dans les deux modes de fonctionnement du dispositif de ventilation.

On se réfère maintenant à la figure 5 pour décrire un troisième mode de réalisation d'un dispositif de ventilation selon l'invention.

Ce troisième mode de réalisation constitue une variante des deux modes de réalisation précédemment décrits. Ici, les deux parties 2 et 7 du boîtier 1 sont placées dans des positions inclinées. La première partie 2 du boîtier 1, qui délimite la chambre 3, est située en partie dans le compartiment moteur CM et en partie dans l'habitacle H et loge une partie du moteur électrique 9, tandis que la seconde partie du boîtier 7 est située dans l'habitacle H et loge le reste du groupe moto-ventilateur (turbine 10, volute 13 et reste du moteur électrique 9).

Par ailleurs, la chambre 3 loge ici un filtre à air 22, de type "Plier", dans lequel est ménagé une ouverture pour le passage du moteur électrique 9.

Les entrée d'air recirculé 5 et entrée d'air extérieur 4 sont ici placées à deux extrémités sensiblement opposées (inférieure et supérieure) du boîtier 1. De ce fait, le dispositif de sélection de flux d'air 8 comporte un volet de type drapeau 8a, pour commander l'accès de l'air recirculé dans la chambre 3, et un volet de type papillon 8b, pour commander l'accès de l'air extérieur dans la chambre 3.

Les moyens d'atténuation sont toujours réalisés sous la forme d'un écran acoustique 15 placé au niveau de l'entrée d'air recirculé 5, dans la partie inférieure du boîtier 1. L'écran acoustique 15 est solidarisé à la seconde partie 7 du boîtier 1 ainsi qu'à la première partie 2 du boîtier 1. Cet écran acoustique 15 sert de zone opaque acoustiquement pour l'entrée d'air recirculé 5.

L'invention ne se limite pas aux modes de réalisation de dispositif de ventilation décrits ci-avant, seulement à titre d'exemple, mais elle englobe toutes les variantes que pourra envisager l'homme de l'art dans le cadre des revendications ci-après.

Ainsi, on a décrit des modes de réalisation dans lesquels l'écran acoustique était placé au niveau de l'entrée d'air recirculé. Mais, cet écran pourrait être placé au niveau de l'entrée d'air extérieur, ou bien au niveau de l'entrée d'air recirculé et de l'entrée d'air extérieur, ainsi que couvrir tout ou partie de la volute et du support moteur.

## Revendications

1. Dispositif de ventilation d'un habitacle (H), notamment de véhicule automobile, du type comprenant un boîtier (1) muni d'une entrée d'air extérieur (4) et d'une entrée d'air recirculé (5), agencées dans une première partie (2) dudit boîtier (1) et propres à alimenter un ventilateur (9-13), à débit d'aspiration d'air variable et logé dans une seconde partie (7) dudit boîtier (1), sous le contrôle d'au moins un volet d'entrée d'air (8) à position variable, comportant un écran acoustique (15) agencé de manière à réfléchir lesdites ondes sonores vers une paroi (CL) du véhicule, placée à l'interface entre ledit habitacle (H) et un compartiment moteur (CM) pour limiter la propagation vers l'extérieur dudit boîtier (1), au moins côté habitacle (H), des ondes sonores produites par le flux d'air circulant dans lesdites entrées d'air (4,5),
ledit écran acoustique (15) délimite avec une paroi de la première partie (2) du boîtier (1) une ouverture d'admission (16) de l'entrée d'air recirculé (5) **caractérisé en ce que** ledit écran acoustique (15) comporte une paroi munie d'une partie terminale (18) faisant saillie, sur une première longueur choisie (hs), à l'extérieur dudit boîtier (1), au delà de l'ouverture d'admission (16).

2. Dispositif selon la revendication 1, **caractérisé en ce que** lesdits moyens d'atténuation (15,17) comprennent un revêtement (17), installé sur une paroi interne dudit écran acoustique (15), exposée au flux d'air, et propre à absorber au moins partiellement lesdites ondes sonores.

3. Dispositif selon l'une des revendications 1 ou 2, **caractérisé en ce qu**'une partie au moins des parois internes dudit boîtier (1), exposées au flux d'air, comporte des moyens d'atténuation auxiliaires.

4. Dispositif selon la revendication 3, **caractérisé en ce que** lesdits moyens d'atténuation auxiliaires comprennent un revêtement (17) installé sur ladite partie des parois internes du boîtier (1) et propre à absorber au moins partiellement lesdites ondes sonores.

5. Dispositif selon l'une des revendications 2 à 4, **caractérisé en ce que** ledit revêtement(17) est réalisé dans un matériau de type poreux.

6. Dispositif selon la revendication 5, **caractérisé en ce que** ledit matériau est une mousse à cellules ouvertes ou un matériau de type feutre.

7. Dispositif selon la revendication 1, **caractérisé en ce que** ladite première longueur (hs) est choisie en fonction d'une seconde longueur (ds), perpendiculaire au plan défini sensiblement par ladite partie terminale (18), et suivant laquelle s'étend au moins une ouverture (16, 19) d'accès à au moins une desdites entrée d'air recirculé (5) et entrée d'air extérieur (4).

8. Dispositif selon la revendication 7, **caractérisé en ce que** ledit écran acoustique (15) est implanté, au moins en partie à l'extérieur dudit boîtier (1).

9. Dispositif selon la revendication 7, **caractérisé en ce que** ledit écran acoustique (15) est implanté, au moins en partie à l'intérieur dudit boîtier (1).

10. Dispositif selon l'une des revendications 7 à 9, **caractérisé en ce que** l'ouverture (16) d'accès à ladite entrée d'air recirculé (5) et l'ouverture (19) d'accès à ladite entrée d'air extérieur (4) présentent des diamètres hydrauliques (Dhr, Dhf) choisis.

## Claims

1. Device for ventilating a passenger compartment (H), particularly of a motor vehicle, of the type comprising a casing (1) furnished with an outside air inlet (4) and a recirculated air inlet (5), arranged in a first portion (2) of the said casing (1) and capable of supplying a fan (9-13) at a variable air aspiration rate and housed in a second portion (7) of the said casing (1), under the control of at least one variable-position air inlet flap (8), comprising an acoustic screen (15) arranged so as to reflect the said sound waves towards a wall (CL) of the vehicle, placed at the interface between the said passenger compartment (H) and an engine compartment (CM) in order to limit propagation to the outside of the said casing (1), at least on the passenger compartment side (H), of the sound waves generated by the air flow travelling in the said air inlets (4, 5), the said acoustic screen (15) delimits, with a wall of the first portion (2) of the casing (1), an admission opening (16) of the recirculated air inlet (5), **characterized in that** the said acoustic screen (15) comprises a wall furnished with a terminal portion (18) protruding, over a first chosen length (hs), outside the said casing (1) beyond the admission opening (16).

2. Device according to Claim 1, **characterized in that** the said attenuation means (15, 17) comprise a coating (17), installed on an internal wall of the said acoustic screen (15), exposed to the air flow, and capable of absorbing at least partially the said sound waves.

3. Device according to one of Claims 1 or 2, **characterized in that** at least a portion of the internal walls of the said casing (1), exposed to the air flow, comprises auxiliary attenuation means.

4. Device according to Claim 3, **characterized in that** the said auxiliary attenuation means comprise a coating (17) installed on the said portion of the internal walls of the casing (1) and capable of absorbing at least partially the said sound waves.

5. Device according to one of Claims 2 to 4, **characterized in that** the said coating (17) is made of a porous type of material.

6. Device according to Claim 5, **characterized in that** the said material is an open-cell foam or a material of the felt type.

7. Device according to Claim 1, **characterized in that** the said first length (hs) is chosen as a function of a second length (ds), perpendicular to the plane defined substantially by the said terminal portion (18) and along which extends at least one opening (16, 19) for access to at least one of the said recirculated air inlet (5) and outside air inlet (4).

8. Device according to Claim 7, **characterized in that** the said acoustic screen (15) is installed, at least partly, outside the said casing (1).

9. Device according to Claim 7, **characterized in that** the said acoustic screen (15) is installed, at least partly, inside the said casing (1).

10. Device according to one of Claims 7 to 9, **characterized in that** the opening (16) for access to the said recirculated air inlet (5) and the opening (19) for access to the said outside air inlet (4) have chosen hydraulic diameters (Dhr, Dhf).

## Patentansprüche

1. Belüftungsvorrichtung einer Fahrgastzelle (H), insbesondere eines Kraftfahrzeugs; des Typs, der ein Gehäuse (1) aufweist, das mit einem Außenlufteinlass (4) und einem Rückführlufteinlass (5) versehen ist, die derart in einem ersten Teil (2) des Gehäuses (1) eingerichtet sind, dass sie einen Ventilator (9-13) mit variablem Luftansaugdurchsatz, der in einem zweiten Teil (7) des Gehäuses (1) untergebracht ist, unter der Kontrolle mindestens einer Lufteinlassklappe (8) mit variabler Position versorgen können, die eine akustische Abschirmung (15) aufweist, die derart eingerichtet ist, dass sie die Schallwellen zu einer Wand (CL) des Fahrzeugs reflektiert, die an der Schnittstelle zwischen der Fahrgastzelle (H) und einem Motörraum (CM) platziert ist, um das Ausbreiten der Schallwellen, die von dem Luftstrom, der in den Lufteinlässen (4, 5) zirkuliert, nach außerhalb des Gehäuses (1) zumindest auf der Seite der Fahrgastzelle (H) einzuschränken, wobei die akustische Abschirmung (15) mit einer Wand des ersten Teils (2) des Gehäuses (1) eine Einlassöffnung (16) des Rückführlufteinlasses (5) abgrenzt, **dadurch gekennzeichnet, dass** die akustische Abschirmung (15) eine Wand aufweist, die mit einem Endteil (18) versehen ist, der auf einer ersten ausgewählten Länge (hs) außerhalb des Gehäuses (1) über die Einlassöffnung (16) hinaus steht.

2. Vorrichtung nach Anspruch 1, **dadurch gekennzeichnet, dass** die Dämpfungsmittel (15, 17) eine Beschichtung (17) aufweisen, die auf einer Innenwand der akustischen Abschirmung (15) dem Luftstrom ausgesetzt installiert ist und die Schallwellen mindestens teilweise absorbieren kann.

3. Vorrichtung nach einem der Ansprüche 1 oder 2, **dadurch gekennzeichnet, dass** mindestens ein Teil der Innenwände des Gehäuses (1), die dem Luftstrom ausgesetzt sind, Hilfsdämpfungsmittel aufweist.

4. Vorrichtung nach Anspruch 3, **dadurch gekennzeichnet, dass** die Hilfsdämpfungsmittel eine Beschichtung (17) aufweisen, die auf dem Teil der Innenwände des Gehäuses (1) installiert ist und die Schallwellen mindestens teilweise absorbieren kann.

5. Vorrichtung nach einem der Ansprüche 2 bis 4, **dadurch gekennzeichnet, dass** die Beschichtung (17) aus einem porigen Material besteht.

6. Vorrichtung nach Anspruch 5, **dadurch gekennzeichnet, dass** das Material ein offenzelliger Schaumstoff oder ein filzartiges Material ist.

7. Vorrichtung nach Anspruch 1, **dadurch gekennzeichnet, dass** die erste Länge (hs) in Abhängigkeit von einer zweiten Länge (ds), die zu der Ebene senkrecht liegt, ausgewählt wird, die im Wesentlichen von dem Endteil (18) definiert wird, und entlang welcher sich mindestens eine Zugangsöffnung (16, 19) zu mindestens dem Rückführlufteinlass (5) oder dem Außenlufteinlass (4) erstreckt.

8. Vorrichtung nach Anspruch 7, **dadurch gekennzeichnet, dass** die akustische Abschirmung (15) mindestens zum Teil außerhalb des Gehäuses (1) liegt.

9. Vorrichtung nach Anspruch 7, **dadurch gekennzeichnet, dass** die akustische Abschirmung (15) mindestens zum Teil innerhalb des Gehäuses (1) liegt.

10. Vorrichtung nach einem der Ansprüche 7 bis 9, **dadurch gekennzeichnet, dass** die Zugangsöffnung (16) zu dem Rückführlufteinlass (5) und die Zugangsöffnung (19) zu dem Außenlufteinlass (4) ausgewählte hydraulische Durchmesser (Dhr, Dhf) aufweisen.
